(19) Europäisches Patentamt
European Patent Office
Office européen des brevets

(11) **EP 4 361 529 A1**

(12) **EUROPEAN PATENT APPLICATION**

(43) Date of publication:
**01.05.2024  Bulletin 2024/18**

(21) Application number: **23204452.9**

(22) Date of filing: **18.10.2023**

(51) International Patent Classification (IPC):
**F25B 13/00** (2006.01)  **F25B 41/20** (2021.01)

(52) Cooperative Patent Classification (CPC):
**F25B 13/00; F25B 41/20;** F25B 2313/0231

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.10.2022  KR 20220138146**

(71) Applicant: **LG Electronics Inc.**
**Yeongdeungpo-gu**
**Seoul 07336 (KR)**

(72) Inventors:
• **KIM, Daehyoung**
**08592 Seoul (KR)**
• **SA, Yongcheol**
**08592 Seoul (KR)**
• **JANG, Jiyoung**
**08592 Seoul (KR)**
• **SONG, Chiwoo**
**08592 Seoul (KR)**
• **LEE, Jisung**
**08592 Seoul (KR)**

(74) Representative: **Vossius & Partner**
**Patentanwälte Rechtsanwälte mbB**
**Siebertstrasse 3**
**81675 München (DE)**

(54)  **AIR CONDITIONER**

(57)    Disclosed is an air conditioner. The air conditioner of the present disclosure includes a compressor which compresses a refrigerant; an outdoor heat exchanger through which the refrigerant discharged from the compressor flows; a plurality of expansion valves which expand the refrigerant passed through the outdoor heat exchanger; a plurality of indoor heat exchangers through which the refrigerant passed through the plurality of expansion valves flows; a plurality of connection pipes which connect the plurality of indoor heat exchangers and the compressor; and a plurality of variable valves installed in the plurality of connection pipes, wherein an opening degree of each of the plurality of variable valves is adjustable.

**FIG. 5**

EP 4 361 529 A1

**Description**

**CROSS-REFERENCE TO THE RELATED APPLICATION**

This application claims priority from Korean Patent Application No. 10-2022-0138146, filed on October 25, 2022, in the Korean Intellectual Property Office, the disclosure of which is incorporated herein by reference in its entirety.

**BACKGROUND OF THE INVENTION**

1. Field of the invention

This disclosure relates to an air conditioner. Particularly, this disclosure relates to an air conditioner capable of individually adjusting blowdown temperatures of a plurality of indoor heat exchangers.

2. Description of the Related Art

In general, an air conditioner refers to a device that heats or cools a room through processes of compression, condensation, expansion, and evaporation of a refrigerant. When an air conditioner includes a plurality of indoor heat exchangers, respective indoor spaces can be simultaneously heated and cooled. In addition, it is possible to switch the operation mode of the air conditioner. That is, the heating operation may be switched to the cooling operation, or the cooling operation may be switched to the heating operation.
However, in a conventional air conditioner, the evaporation pressures of a plurality of indoor heat exchangers performing the cooling operation are identical to each other, such that the plurality of indoor heat exchangers cannot but have the same blowdown temperature. For this reason, there is a problem in that it is difficult to adjust the blowdown temperature for each indoor space to meet the needs of occupants.

**SUMMARY OF THE INVENTION**

It is an objective of the present disclosure to solve the above and other problems.
Another object of the present disclosure may be to provide an air conditioner capable of setting different evaporation pressures of a plurality of indoor heat exchangers functioning as an evaporator, thereby differently setting a blowdown temperature for each indoor space.
Another object of the present disclosure may be to provide a method for setting a target temperature of a refrigerant in an inlet side of an indoor heat exchanger.
Another object of the present disclosure may be to provide a method for adjusting the opening degree of a variable valve to adjust the temperature of the refrigerant in an inlet side of an indoor heat exchanger to a target temperature.
Another object of the present disclosure may be to provide an air conditioner capable of preventing unnecessary pressure drop and efficiency reduction.
In accordance with an aspect of the present disclosure, an air conditioner includes: a compressor which compresses a refrigerant; an outdoor heat exchanger through which the refrigerant discharged from the compressor flows; a plurality of expansion valves which expand the refrigerant passed through the outdoor heat exchanger; a plurality of indoor heat exchangers through which the refrigerant passed through the plurality of expansion valves flows; a plurality of connection pipes which connect the plurality of indoor heat exchangers and the compressor; and a plurality of variable valves installed in the plurality of connection pipes, wherein an opening degree of each of the plurality of variable valves is adjustable.
In accordance with another aspect of the present disclosure, the variable valve may be an electronic expansion valve (EEV).
In accordance with another aspect of the present disclosure, a pressure of refrigerant at an inlet side of the indoor heat exchanger may increase as the opening degree of the variable valve decreases.
In accordance with another aspect of the present disclosure, the opening degree of the variable valve may increase as a user's set temperature for the indoor heat exchanger decreases.
In accordance with another aspect of the present disclosure, the opening degree of the variable valve may increase as a difference between a current temperature of a room where the indoor heat exchanger is located and the user's set temperature for the indoor heat exchanger increases.
In accordance with another aspect of the present disclosure, the opening degree of the variable valve may be adjusted based on an error which is a difference between a current temperature of refrigerant at an inlet side of the indoor heat exchanger and a target temperature, and an error slope which is a temperature change of the refrigerant at the inlet side of the indoor heat exchanger for a certain period of time.

In accordance with another aspect of the present disclosure, the opening degree of the variable valve may be increased than current one when the error is '0' and the error slope is positive.

In accordance with another aspect of the present disclosure, the opening degree of the variable valve may be decreased than current one when the error is '0' and the error slope is negative.

In accordance with another aspect of the present disclosure, the opening degree of the variable valve may be increased than current one when the error slope is '0' and the error is positive.

In accordance with another aspect of the present disclosure, the opening degree of the variable valve may be decreased than current one when the error slope is '0' and the error is negative.

In accordance with another aspect of the present disclosure, a weight of the error may be greater than a weight of the error slope with respect to a change in the opening degree of the variable valve.

In accordance with another aspect of the present disclosure, one of the plurality of variable valves may be connected to a specific indoor heat exchanger in which the lowest target temperature is set among target temperatures of refrigerant at an inlet side of the plurality of indoor heat exchangers, and may be fully opened.

In accordance with another aspect of the present disclosure, an operating frequency of the compressor may be adjustable to match a temperature of refrigerant at an inlet side of the specific indoor heat exchanger to the lowest target temperature.

In accordance with another aspect of the present disclosure, an opening degree of the expansion valve may be adjustable to adjust a superheat degree which is a difference between a temperature of refrigerant at an outlet side of the indoor heat exchanger and a temperature of refrigerant at an inlet side.

In accordance with another aspect of the present disclosure, the air conditioner may further include a temperature sensor for measuring the temperature of refrigerant at the outlet side of the indoor heat exchanger and the temperature of refrigerant at the inlet side.

In accordance with another aspect of the present disclosure, some of the plurality of indoor heat exchangers may be maintained as an evaporator through which the refrigerant passed through the expansion valve flows, and the rest of the plurality of indoor heat exchangers may be switchable into a condenser through which the refrigerant discharged from the compressor flows.

In accordance with another aspect of the present disclosure, the plurality of indoor heat exchangers are switchable from an evaporator through which the refrigerant passed through the expansion valve flows into a condenser through which the refrigerant discharged from the compressor flows.

## BRIEF DESCRIPTION OF THE DRAWINGS

The above and other objects, features and advantages of the present disclosure will be more apparent from the following detailed description in conjunction with the accompanying drawings, in which:

FIG. 1 is a configuration diagram of an outdoor unit of an air conditioner according to a first embodiment of the present disclosure;
FIG. 2 is a configuration diagram of an indoor unit of the air conditioner according to the first embodiment of the present disclosure;
FIG. 3 is a view for explaining a heating operation and a cooling operation of the air conditioner according to the first embodiment of the present disclosure;
FIGS. 4 and 5 are views of the air conditioner according to the first embodiment of the present disclosure, and are views for explaining a configuration in which evaporation pressure is differently adjusted for each indoor heat exchanger by adjusting the opening degree of a variable valve;
FIGS. 6 and 7 are views of an air conditioner according to a second embodiment of the present disclosure, and are views for explaining a configuration in which evaporation pressure is differently adjusted for each indoor heat exchanger by adjusting the opening degree of a variable valve;
FIG. 8 and 9 are views for explaining a method of determining a target temperature of refrigerant in an inlet side of the indoor heat exchanger;
FIG. 10 is a diagram for explaining a method of adjusting the opening degree of a variable valve to adjust a temperature of refrigerant in an inlet side of the indoor heat exchanger to a target temperature;
FIG. 11 is a view for explaining a method of adjusting the opening degrees of variable valves connected to indoor heat exchangers having different target temperatures;
FIG. 12 is a flowchart of a method for controlling an air conditioner according to the first embodiment of the present disclosure; and
FIG. 13 is a flowchart of a method for controlling an air conditioner according to the second embodiment of the present disclosure.

## DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

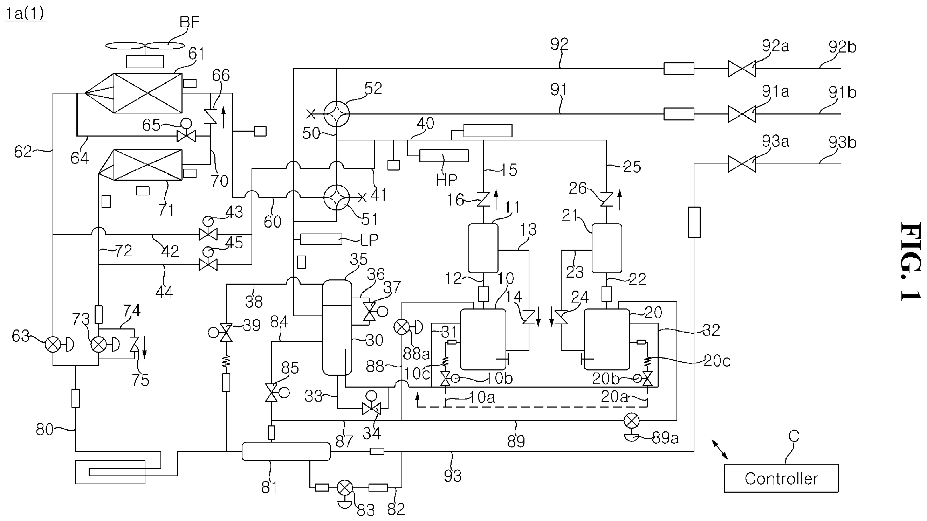

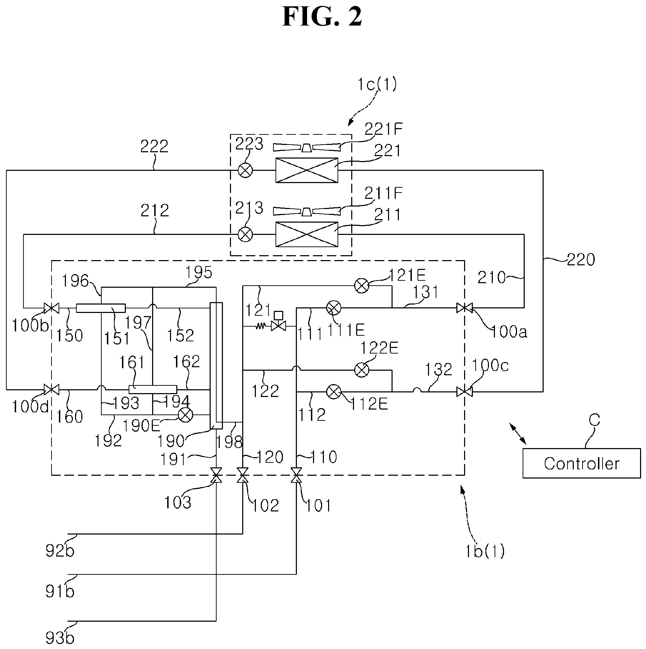

Referring to FIGS. 1 and 2, an air conditioner 1 may include an outdoor unit 1a, a heat recovery unit 1b, and an indoor unit 1c. The outdoor unit 1a includes a compressor 10, 20, an oil separator 11, 21, an accumulator 30, a switching valve 51, 52, an outdoor heat exchanger 61, 71, and an outdoor expansion valve 63, 73.

The compressor 10, 20 may compress and discharge the refrigerant at high temperature and high pressure. The compressor 10, 20 may be an inverter compressor capable of controlling the amount of refrigerant and the discharge pressure of the refrigerant by adjusting the operating frequency. For example, the compressor 10, 20 may include a first compressor 10 and a second compressor 20. Alternatively, the number of compressor 10, 20 may be one, or three or more.

The oil separator 11, 21 may be connected to the compressor 10, 20 through a refrigerant pipe 12, 22 and an oil recovery pipe 13, 23. The refrigerant discharged from a first compressor 10 may flow into a first oil separator 11 through a first refrigerant pipe 12, and the oil flowing into the first oil separator 11 may be returned to the first compressor 10 through a first oil recovery pipe 13. A first check valve 14 may be installed in the first oil recovery pipe 13, and the fluid in the first oil recovery pipe 13 may flow from the first oil separator 11 to the first compressor 10. The refrigerant discharged from a second compressor 20 may flow into a second oil separator 21 through a second refrigerant pipe 22, and the oil flowing into the second oil separator 21 may be returned to the second compressor 20 through a second oil recovery pipe 23. A second check valve 24 may be installed in the second oil recovery pipe 23, and the fluid in the second oil recovery pipe 23 may flow from the second oil separator 21 to the second compressor 20.

The refrigerant passing through the first oil separator 11 may flow through a first refrigerant pipe 15 in which a first check valve 16 is installed, and the refrigerant passing through the second oil separator 21 may flow through a second refrigerant pipe 25 in which a second check valve 16 is installed. The refrigerant passing through the first refrigerant pipe 15 and the second refrigerant pipe 25 may flow through a discharge pipe 40, 50.

The accumulator 30 may provide gaseous refrigerant to the compressor 10, 20 through a refrigerant pipe 31, 32. One end of the oil recovery pipe 33 may be connected to the accumulator 30, and the other end of the oil recovery pipe 33 may be connected to the refrigerant pipe 31, 32. A control valve 34 may be installed in the oil recovery pipe 33 and may control the flow of oil in the oil recovery pipe 33.

The switching valve 51, 52 may switch the flow path of the refrigerant according to the operation mode of the air conditioner. The switching valve 51, 52 may be a four-way valve.

A first switching valve 51 may be connected to a discharge pipe 40, 50, a first connection pipe 60, a low pressure pipe 92, and a closed pipe (see "X" near the first switching valve 51 in FIG. 1). Here, the first connection pipe 60 may connect the first switching valve 51 and the first outdoor heat exchanger 61, and the low pressure pipe 92 may provide the low-pressure refrigerant that has passed through the evaporator to the accumulator 30. The first switching valve 51 in a first state may guide the refrigerant in the discharge pipe 40, 50 to the first connection pipe 60 (see the solid line of the first switching valve 51 in FIG. 1). The first switching valve 51 in a second state switched from the first state may guide the refrigerant in the first connection pipe 60 to the low pressure pipe 92 (see the dotted line of first switching valve 51 in FIG. 1). Meanwhile, the first connection pipe 60 may be referred to as a connection pipe 60.

A second switching valve 52 may be connected to the discharge pipe 40, 50, a high pressure pipe 91, the low pressure pipe 92, and the closed pipe (see "X" near the second switching valve 52 in FIG. 1). The second switching valve 52 may guide the refrigerant in the discharge pipe 40, 50 to the high pressure pipe 91.

The outdoor heat exchanger 61, 71 may include a pipe through which refrigerant flows, and may exchange heat between a refrigerant and a heat transfer medium. The heat transfer direction between the refrigerant and the heat transfer medium in the outdoor heat exchanger 61, 71 may be different depending on the operation mode of the air conditioner. When the outdoor heat exchanger 61, 71 serves as a condenser, heat may be transferred from the refrigerant passing through the outdoor heat exchanger 61, 71 to the heat transfer medium, and the refrigerant may be condensed. When the outdoor heat exchanger 61, 71 serves as an evaporator, heat may be transferred from the heat transfer medium to the refrigerant passing through the outdoor heat exchanger 61, 71, and the refrigerant may be evaporated. For example, the heat transfer medium may be outdoor air. In this case, an outdoor fan BF can cause air to flow through the outdoor heat exchanger 61, 71. The number of outdoor heat exchanger 61, 71 may be one or two or more.

One end of a first outdoor heat exchanger 61 may be connected to the first connection pipe 60, and the other end of the first outdoor heat exchanger 61 may be connected to a first outdoor pipe 62. One end of a variable bypass pipe 64 may be connected to the first outdoor pipe 62, and the other end of the variable bypass pipe 64 may be connected to the first connection pipe 60. A variable valve 65 may be installed in the variable bypass pipe 64. A check valve 66 may be installed in the variable bypass pipe 64 at between the variable valve 65 and the other end of the variable bypass pipe 64, and may block the refrigerant in the first connection pipe 60 from passing through the variable bypass pipe 64.

One end of a second outdoor heat exchanger 71 may be connected to the variable bypass pipe 64 at between the variable valve 65 and the check valve 66 through a second connection pipe 70. The other end of the second outdoor heat exchanger 71 may be connected to the second outdoor pipe 72. One end and the other end of the bypass pipe 74 may be connected to the second outdoor pipe 72, and the check valve 75 may be installed in the bypass pipe 74. Meanwhile, the second connection pipe 70 may be referred to as a connection pipe 70.

The outdoor expansion valve 63, 73 may include a first outdoor expansion valve 63 and a second outdoor expansion valve 73. The first outdoor expansion valve 63 may be installed in the first outdoor pipe 62 and may expand the refrigerant flowing through the first outdoor pipe 62. The second outdoor expansion valve 73 may be installed in the second outdoor pipe 72 and expand the refrigerant flowing through the second outdoor pipe 72. The outdoor expansion valve 63, 73 may be an Electronic Expansion Valve (EEV).

A supercooling pipe 80 may connect the outdoor expansion valve 63, 73 and a supercooler 81. A liquid pipe 93 may be opposite to the supercooling pipe 80 with respect to the supercooler 81, and may be connected to the supercooler 81. One end of a supercooling bypass pipe 82 may be connected to the liquid pipe 93, and the other end of the supercooling bypass pipe 82 may be connected to the supercooler 81.

A part of the refrigerant in the liquid pipe 93 may be expanded by a supercooling expansion valve 83 installed in the bypass pipe 82 and may pass through the supercooler 81. The refrigerant evaporated while passing through the supercooler 81 may be supplied to the compressor 10, 20 through a refrigerant pipe 87, 88, 89. At this time, an expansion valve 88a, 89a may be installed in the refrigerant pipe 88, 89 to expand the refrigerant passing through the refrigerant pipe 88, 89. Meanwhile, a bypass pipe 84 in which a bypass valve 85 is installed may have one end connected to the accumulator 30 and the other end connected to the refrigerant pipe 87. When the bypass valve 85 is opened, the liquid refrigerant in the accumulator 30 may be expanded by the expansion valve 88a, 89a in the refrigerant pipe 87, 88, 89 and flow into the compressor 10, 20. The supercooling expansion valve 83 and the expansion valve 88a, 89a may be an electronic expansion valve (EEV).

The rest of the refrigerant in the liquid pipe 93 may be supercooled while passing through the supercooler 81. The supercooled refrigerant may pass through the supercooling pipe 80.

A receiver 35 may store refrigerant. A first receiver connection pipe 36 may connect the receiver 35 and the accumulator 30, and a first valve 37 may be installed in the first receiver connection pipe 36 and be opened or closed. A second receiver connection pipe 38 may connect the receiver 35 and the supercooling pipe 80, and a second valve 39 may be installed in the second receiver connection pipe 38 and be opened or closed. The first and second valves 37 and 39 may adjust the amount of refrigerant circulated through the refrigerant pipe.

The indoor unit 1c includes an indoor heat exchanger 211, 221 and an indoor expansion valve 213, 223.

The indoor heat exchanger 211, 221 may include a pipe through which the refrigerant flows, and may exchange heat between the refrigerant and the heat transfer medium. The direction of heat transfer between the refrigerant and the heat transfer medium in the indoor heat exchanger 211, 221 may vary depending on the operation mode of the air conditioner. When the indoor heat exchanger 211, 221 serves as an evaporator, heat may be transferred from the heat transfer medium to the refrigerant passing through the indoor heat exchanger 211, 221, and the refrigerant may be evaporated. When the indoor heat exchanger 211, 221 serves as an a condenser, heat can be transferred from the refrigerant passing through the indoor heat exchanger 211, 221 to the heat transfer medium, and the refrigerant may be condensed. For example, the heat transfer medium may be indoor air. In this case, an indoor fan 211F, 221F may cause air to flow through the indoor heat exchanger 211, 221. For another example, the heat transfer medium may be water. In this case, the water passing through the indoor heat exchanger 211, 221 may be supplied to a radiator or pipe installed in a room to cool or heat the room, or may be supplied to a water tank to provide cold or hot water to the room. Meanwhile, the number of indoor heat exchanger 211, 221 may be one, or two or more.

One end of a first indoor heat exchanger 211 may be connected to a first connection pipe 210, and the other end of the first indoor heat exchanger 211 may be connected to a first indoor pipe 212. One end of a second indoor heat exchanger 221 may be connected to a second connection pipe 220, and the other end of the second indoor heat exchanger 221 may be connected to a second indoor pipe 222.

The indoor expansion valve 213, 223 may include a first indoor expansion valve 213 and a second indoor expansion valve 223. The first indoor expansion valve 213 may be installed in the first indoor pipe 212 and expand the refrigerant flowing through the first indoor pipe 212. The second indoor expansion valve 223 may be installed in the second indoor pipe 222, and may expand the refrigerant flowing through the second indoor pipe 222. The indoor expansion valve 213, 223 may be an electronic expansion valve (EEV).

The heat recovery unit 1b may connect the outdoor unit 1a and the indoor unit 1c through a refrigerant pipe. The heat recovery unit 1b includes a distributor and a supercooler.

A high-pressure connection pipe 91b may be connected to the high-pressure pipe 91 of the outdoor unit 1a through a first connection valve 91a, and may be connected to a high-pressure pipe 110 of the heat recovery unit 1b through a second connection valve 101. The high-pressure pipe 91, the high-pressure connection pipe 91b, and the high-pressure pipe 110 may be a gas pipe through which high-pressure gaseous refrigerant flows. A first high-pressure valve 111E may be installed in a first high-pressure pipe 111 of the high-pressure pipe 110, and the opening degree of the first high-pressure valve 111E may be adjusted. A second high pressure valve 112E may be installed in the second high pressure pipe 112 of the high pressure pipe 110, and the opening degree of the second high pressure valve 112E may be adjusted. The first and second high-pressure valves 111E and 112E may be an electronic expansion valve (EEV). The first and second high-pressure valves 111E and 112E may be a large-capacity EEV having a large flow coefficient. The first and second high-pressure pipes 111 and 112 may be referred to as first and second refrigerant pipes 111 and 112. The first and second high-pressure valves 111E and 112E may be referred to as first and second control valves 111E and 112E.

A low pressure connection pipe 92b may be connected to the low pressure pipe 92 of the outdoor unit 1a through a first connection valve 92a, and may be connected to a low pressure pipe 120 of the heat recovery unit 1b through the second connection valve 102. The low-pressure pipe 92, the low-pressure connection pipe 92b, and the low-pressure pipe 120 may be a gas pipe through which low-pressure gaseous refrigerant flows. A first low pressure valve 121E may be installed in a first low pressure pipe 121 of the low pressure pipe 120, and the opening degree of the first low pressure valve 121E may be adjusted. A second low pressure valve 122E may be installed in a second low pressure pipe 122 of the low pressure pipe 120, and the opening degree of the second low pressure valve 122E may be adjusted. The first and second low pressure valves 121E and 122E may be an electronic expansion valve (EEV). The first and second low pressure valves 121E and 122E may be a large-capacity EEV having a large flow coefficient. The first and second low pressure pipes 121 and 122 may be referred to as first and second connection pipes 121 and 122. The first and second low pressure valves 121E and 122E may be referred to as first and second variable valves 121E and 122E. Meanwhile, the number of each of the high pressure valve 111E, 112E and the low pressure valve 121E, 122E may be the same as the number of indoor heat exchanger 211, 221. The number of indoor heat exchanger 211, 221 may be one, or two or more.

A liquid connection pipe 93b may be connected to the liquid pipe 93 of the outdoor unit 1a through a first connection valve 93a, and may be connected to a liquid pipe 191 of the heat recovery unit 1b through a second connection valve 103. The liquid pipe 93, the liquid connection pipe 93b, and the liquid pipe 191 may be a liquid pipe through which medium-pressure liquid refrigerant flows.

The first high pressure pipe 111 of the high pressure pipe 110 and the first low pressure pipe 121 of the low pressure pipe 120 may be connected to a first refrigerant pipe 131. The first refrigerant pipe 131 may be connected to the first connection pipe 210 through a first valve 100a. The second high pressure pipe 112 of the high pressure pipe 110 and the second low pressure pipe 122 of the low pressure pipe 120 may be connected to a second refrigerant pipe 132. The second refrigerant pipe 132 may be connected to the second connection pipe 220 through a third valve 100c.

A supercooler 151, 161 may connect the indoor pipe 212, 222 and the liquid connection pipe 93b. One end of a first supercooling pipe 150 may be connected to a first supercooler 151, and the other end of the first supercooling pipe 150 may be connected to the first indoor pipe 212 through a second valve 100b. A first pipe 152 may connect a header 190 and the first supercooler 151. One end of a second supercooling pipe 160 may be connected to a second supercooler 161, and the other end of the second supercooling pipe 160 may be connected to the second indoor pipe 222 through a fourth valve 100d. A second pipe 162 may connect the header 190 and the second supercooler 161.

One end of the liquid pipe 191 of the heat recovery unit 1b may be connected to the liquid connection pipe 93b through the second connection valve 103, and the other end of the liquid pipe 191 of the heat recovery unit 1b may be connected to the header 190. One end of a supercooling bypass pipe 192 may be connected to the header 190, and the other end of the supercooling bypass pipe 192 may be connected to the supercooler 151, 161 (see reference numerals 193 and 194 in FIG. 2). A supercooling expansion valve 190E may be installed in the supercooling bypass pipe 192, and expand the refrigerant flowing through the supercooling bypass pipe 192. The supercooling expansion valve 190E may be an electronic expansion valve (EEV).

One end of an evaporation pipe 195 of the heat recovery unit 1b may be connected to the supercooler 151, 161 (see reference numerals 196 and 197 in FIG. 2), and the other end of the evaporation pipe 195 may be connected to the low pressure pipe 120.

Accordingly, a part of the refrigerant in the liquid pipe 191 flows through the supercooling bypass pipe 192, and may be expanded by the supercooling expansion valve 190E, and evaporated while passing through the supercooler 151, 161. The evaporated refrigerant may be provided to the low pressure pipe 120 via the evaporation pipe 195 and the header 190. The rest of the refrigerant in the liquid pipe 191 may flow through the pipe 152, 162 and may be cooled while passing through the supercooler 151, 161. The cooled refrigerant may be supplied to the indoor heat exchanger 211, 221 via the supercooling pipe 150, 160, the indoor pipe 212, 222, and the indoor expansion valve 213, 223.

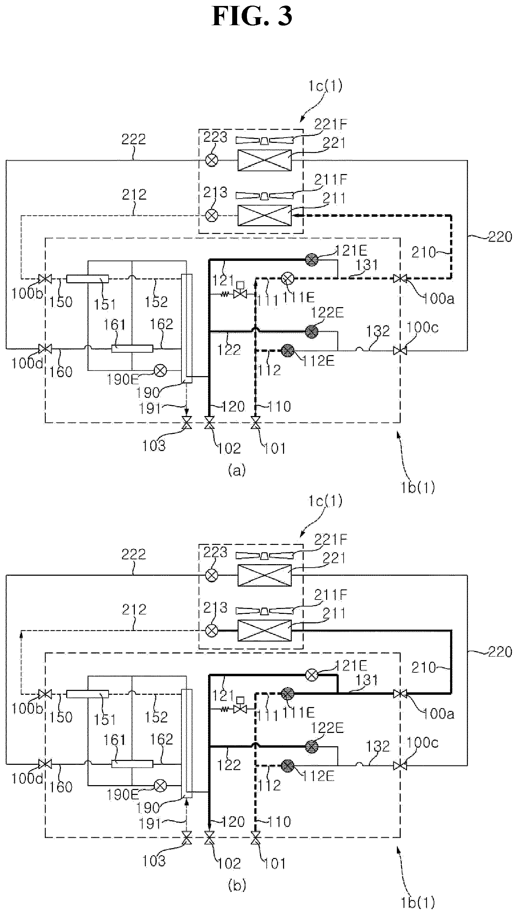

Referring to FIG. 3, the air conditioner may perform a heating operation (see FIG. 3A)) or a cooling operation (see FIG. 3B).

For example, the indoor heat exchanger(s) may serve as a condenser or an evaporator. For another example, among the indoor heat exchangers, an indoor heat exchanger installed in an indoor space requiring heating may serve as a condenser, and an indoor heat exchanger installed in an indoor space requiring cooling may serve as an evaporator. For another example, among indoor heat exchangers, an indoor heat exchanger installed in an indoor space requiring heating or cooling may serve as a condenser or an evaporator, and an indoor heat exchanger installed in an indoor space not requiring heating or cooling may be inoperative.

Referring to FIG. 3A, the first high-pressure valve 111E and a first indoor expansion valve 213 may be opened. The first low pressure valve 121E, the second low pressure valve 122E, and the second high pressure valve 112E may be closed.

The high-temperature, high-pressure refrigerant discharged from the compressor 10, 20 may flow into the high-pressure pipe 110 (see FIGS. 1 and 2) via the oil separator 11, 21, the second switching valve 52, the high pressure pipe 91, and the high pressure connection pipe 91b. The refrigerant in the high-pressure pipe 110 may flow into the first indoor heat exchanger 211 through the first high-pressure valve 111E and the first valve 100a, and may be condensed while passing through the first indoor heat exchanger 211. Accordingly, the indoor space in which the first indoor heat exchanger 211 is installed may be heated. Meanwhile, the first indoor expansion valve 213 may control the degree of supercooling. Here, the degree of supercooling is a difference between the saturation temperature corresponding to the condensation pressure of the first indoor heat exchanger 211 and the outlet temperature of the first indoor heat exchanger 211.

The condensed refrigerant flows into the liquid pipe 93 via the first indoor expansion valve 213, the second valve 100b, the first supercooler 151, the header 190, and the liquid connection pipe 93b (see FIGS. 1 and 2). The refrigerant in the liquid pipe 93 may be cooled while passing through the supercooler 81, expanded by the outdoor expansion valve 63, 73, and evaporated while passing through the outdoor heat exchanger 61, 71.

The evaporated refrigerant may be returned to the compressor 10, 20 via the first connection pipe 60, the first switching valve 51, the low pressure pipe 92, and the accumulator 30. Accordingly, a heating cycle of the air conditioner using the first indoor heat exchanger 211 may be completed.

Referring to FIG. 3B, the first low pressure valve 121E and the first indoor expansion valve 213 may be opened. The first high pressure valve 111E, the second low pressure valve 122E, and the second high pressure valve 112E may be closed.

The high-temperature, high-pressure refrigerant discharged from the compressor 10, 20 may flow into the first connection pipe 60 via the oil separator 11, 21 and the first switching valve 51, and the refrigerant in the first connection pipe 60 may be condensed while passing through the outdoor heat exchanger 61, 71 (see FIGS. 1 and 2).

The condensed refrigerant may flow into the liquid pipe 191 via the outdoor expansion valve 63, 73, the supercooler 81, the liquid pipe 93, and the liquid connection pipe 93b (see FIGS. 1 and 2). The refrigerant in the liquid pipe 191 may be cooled while passing through the first supercooler 151, expanded while passing through the first indoor expansion valve 213, and evaporated while passing through the first indoor heat exchanger 211. Accordingly, the indoor space in which the first indoor heat exchanger 211 is installed may be cooled. Meanwhile, the first indoor expansion valve 213 may control the degree of superheat. Here, the degree of superheat is a difference between the temperature of the refrigerant sucked into the compressor 10, 20 (or the temperature of the refrigerant at the outlet side of the first indoor heat exchanger 211) and the saturation temperature corresponding to the evaporation pressure of the first indoor heat exchanger 211 (or the temperature of the refrigerant at the inlet side of the first indoor heat exchanger 211).

The evaporated refrigerant may be returned to the compressor 10, 20 via the first valve 100a, the first low pressure valve 121E, the low pressure pipe 120, the low pressure connection pipe 92b, the low pressure pipe 92, and the accumulator 30. Accordingly, the cooling cycle of the air conditioner using the first indoor heat exchanger 211 may be completed.

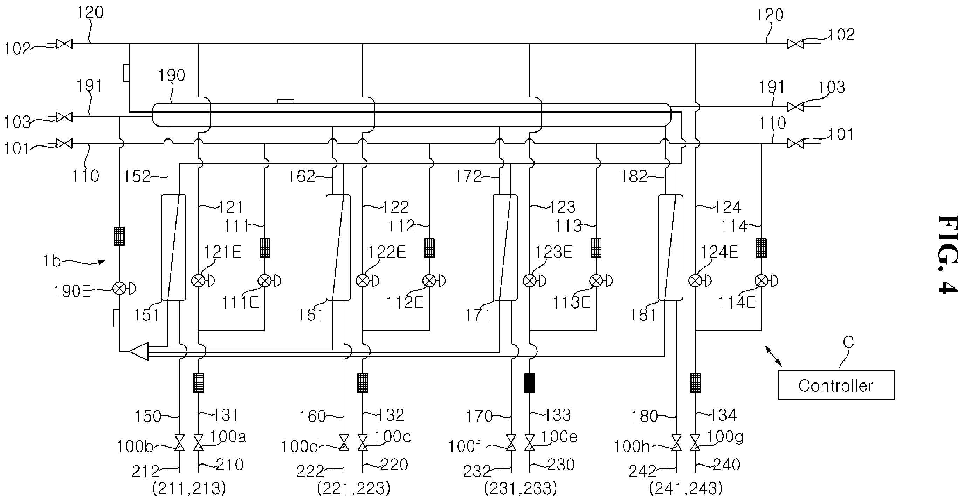

Referring to FIG. 4, four indoor heat exchangers 211, 221, 231, and 241 may be connected to the heat recovery unit 1b.

For example, the air conditioner may perform a heating operation by using four indoor heat exchangers 211, 221, 231, and 241. The first to fourth high-pressure valves 111E, 112E, 113E, and 114E may be opened, and the first to fourth low-pressure valves 121E, 122E, 123E, and 124E may be closed. The first to fourth high-pressure valves 111E, 112E, 113E, and 114E may be referred to as first to fourth control valves 111E, 112E, 113E, and 114E. The first to fourth low pressure valves 121E, 122E, 123E, and 124E may be referred to as first to fourth variable valves 121E, 122E, 123E, and 124E.

Further, the refrigerant of the high-pressure pipe 110 may flow into the first to fourth indoor heat exchangers 211, 221, 231, 241 through the first to fourth high-pressure valves 111E, 112E, 113E, and 114E and the first to fourth connection pipes 210, 220, 230, and 240, and may be condensed while passing through the first to fourth indoor heat exchangers 211, 221, 231, 241. Accordingly, the indoor space in which the first to fourth indoor heat exchangers 211, 221, 231, and 241 are installed may be heated. The condensed refrigerant may be provided to the liquid pipe 191 via the first to fourth indoor expansion valves 213, 223, 233, and 243, the first to fourth indoor pipes 212, 222, 232, and 242, and the first to fourth supercoolers 151, 161, 171, 181.

For example, the air conditioner may perform a heating operation by using the first and second indoor heat exchangers 211 and 221, and perform a cooling operation by using the third and fourth indoor heat exchangers 231 and 241. The first and second high pressure valves 111E and 112E may be opened, and the first and second low pressure valves 121E and 122E may be closed. The third and fourth low pressure valves 123E and 124E may be opened, and the third and fourth high pressure valves 113E and 114E may be closed.

In addition, the refrigerant of the high-pressure pipe 110 may flow into the first and second indoor heat exchangers 211 and 221 through the first and second high-pressure valves 111E and 112E and the first and second connection pipes 210 and 220, and may be condensed while passing through the first and second indoor heat exchangers 211 and 221. Thus, the indoor space in which the first and second indoor heat exchanger 211, 221 are installed may be heated. The condensed refrigerant may be provided to the liquid pipe 191 via the first and second indoor expansion valve 213 and 223, the first and second indoor pipes 212 and 222, and the first and second supercoolers 151 and 161.

In addition, the refrigerant in the liquid pipe 191 may be cooled while passing through the third and fourth supercoolers 171 and 181. The cooled refrigerant may pass through the third and fourth supercooling pipes 170 and 180 and the third and fourth indoor pipes 232 and 242, be expanded by the third and fourth indoor expansion valves 233 and 243, and be evaporated while passing through the third and fourth indoor heat exchangers 231 and 241. Thus, the indoor space in which the third and fourth indoor heat exchangers 231 and 241 are installed may be cooled. The evaporated refrigerant may be supplied to the low pressure pipe 120 via the third and fourth connection pipes 230 and 240 and the third and fourth low pressure valves 123E and 124E.

Meanwhile, the air conditioner may perform a cooling operation by using four indoor heat exchangers 211, 221, 231, and 241.

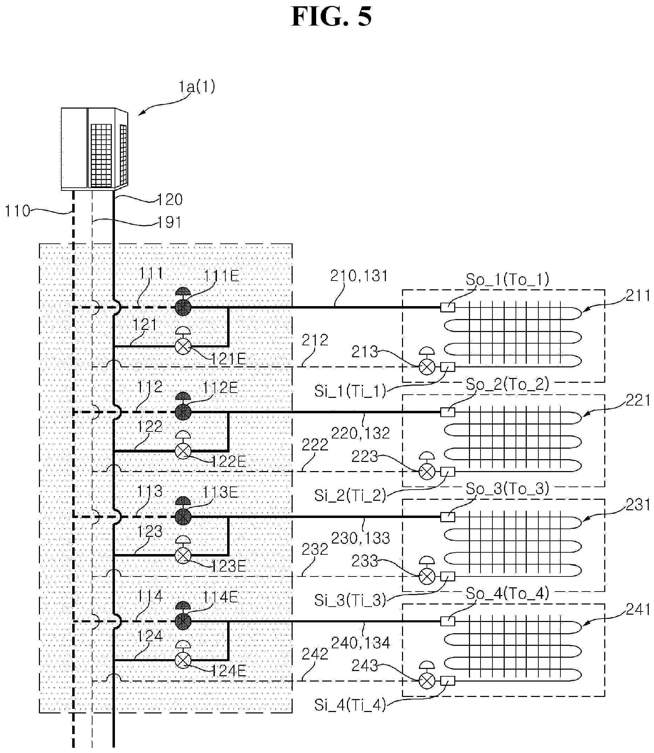

Referring to FIGS. 4 and 5, the plurality of indoor heat exchangers 211, 221, 231, and 241 may serve as an evaporator, and may have the same or different evaporation pressures.

The plurality of low-pressure valves 121E, 122E, 123E, and 124E and the plurality of indoor expansion valves 213, 223, 233, and 243 may be opened, and the plurality of high-pressure valves 111E, 112E, 113E, and 114E may be closed.

The high-temperature, high-pressure refrigerant discharged from the compressor 10, 20 may flow into the first connection pipe 60 via the oil separator 11, 21 and the first switching valve 51, and the refrigerant in the first connection pipe 60 may be condensed while passing through the outdoor heat exchanger 61, 71 (see FIGS. 1 and 2). The condensed refrigerant may flow into the liquid pipe 191 via the outdoor expansion valve 63, 73, the supercooler 81, the liquid pipe 93, and the liquid connection pipe 93b (see FIGS. 1 and 2).

The refrigerant in the liquid pipe 191 may be cooled while passing through the plurality of supercoolers 151, 161, 171, and 181. The cooled refrigerant may pass through the plurality of supercooling pipes 150, 160, 170, and 180, be expanded by a plurality of indoor expansion valves 213, 223, 233, and 243, and be evaporated while passing through the plurality of indoor heat exchangers 211, 221, 231, and 241. Thus, the indoor space in which the plurality of indoor heat exchangers 211, 221, 231, and 241 are installed may be cooled. The evaporated refrigerant may be provided to the low pressure pipe 120 via the plurality of connection pipes 210, 220, 230, and 240 and the plurality of low pressure valves 121E, 122E, 123E, and 124E.

The refrigerant in the low pressure pipe 120 may be returned to the compressor 10, 20 via the low pressure pipe 92 and the accumulator 30 (see FIGS. 1 and 2). Accordingly, the cooling cycle of the air conditioner using the plurality of indoor heat exchangers 211, 221, 231, and 241 may be completed.

In this case, each of the plurality of indoor expansion valves 213, 223, 233, and 243 may control the degree of superheat of each of the plurality of indoor heat exchangers 211, 221, 231, and 241. Here, the degree of superheat is a difference between the temperature of the refrigerant sucked into the compressor 10, 20 (or the temperature of the refrigerant at the outlet side of each indoor heat exchanger) and the saturation temperature corresponding to the evaporation pressure of each indoor heat exchanger (or the temperature of the refrigerant at the inlet side of each indoor heat exchanger). For example, the temperature (To_1, To_2, To_3, and To_4) of the refrigerant at the outlet side of each of the plurality of indoor heat exchangers 211, 221, 231, and 241 may be measured by each of the plurality of temperature sensors (So_1, So_2, So_3, and So_4).

When the compressor 10, 20 of the outdoor unit 1a operates at a specific operating frequency, the pressure of the refrigerant sucked into the compressor 10, 20 may be constant. In this case, the evaporation pressure of each of the plurality of indoor heat exchangers 211, 221, 231, and 241 may be adjusted by adjusting the opening degree of each of the plurality of low pressure valves 121E, 122E, 123E, and 124E. In addition, the refrigerant that passes through each of the plurality of indoor expansion valves 213, 223, 233, and 243, and flows into the inlet of each of the plurality of indoor heat exchangers 211, 221, 231, and 241 has a two-phase state. Thus, it can be said that the temperature of the refrigerant at the inlet side of each of the plurality of indoor heat exchangers 211, 221, 231, and 241 may be adjusted by adjusting the opening degree of each of the plurality of low pressure valves 121E, 122E, 123E, 124E. This can be expressed as in Equation 1 below.

$$\text{Equation 1: } L1=f(Ti\_1), L2=f(Ti\_2), L3=f(Ti\_3), L4=f(Ti\_4)$$

Here, L1 is the opening degree of the first low pressure valve 121E, and Ti_1 is the temperature of the refrigerant at the inlet side of the first indoor heat exchanger 211, which can be measured by a first temperature sensor Si_1. L2 is the opening degree of the second low pressure valve 122E, and Ti_2 is the temperature of the refrigerant at the inlet side of the second indoor heat exchanger 221, which can be measured by a second temperature sensor Si_2. L3 is the opening degree of the third low pressure valve 123E, and Ti_3 is the temperature of the refrigerant at the inlet side of the third indoor heat exchanger 231, which can be measured by a third temperature sensor Si_3. L4 is the opening degree of the fourth low pressure valve 124E, and Ti_4 is the temperature of the refrigerant at the inlet side of the fourth indoor heat exchanger 241, which can be measured by a fourth temperature sensor Si_4. Alternatively, more precisely, the opening degree of the low pressure valve described above and later may be adjusted based on the pressure of the refrigerant at the inlet side of the indoor heat exchanger measured by a pressure sensor.

In this case, if the pressure drop of the refrigerant in the refrigerant pipe connecting the indoor heat exchanger and the compressor is excluded to be considered, the evaporation pressure of the indoor heat exchanger 211, 221, 231, 241 connected to the fully opened low pressure valves 121E, 122E, 123E, 124E may be the same as the pressure of the refrigerant at the inlet side of the compressor 10, 20. In addition, as the opening degree of the low-pressure valve 121E, 122E, 123E, 124E decreases, the evaporation pressure of the indoor heat exchanger 211, 221, 231, 241 connected thereto increases may be greater than the pressure (fixed value) of the refrigerant at the inlet side of the compressor 10, 20.

Accordingly, the controller C of the air conditioner adjusts the opening degree of each of the plurality of low pressure valves 121E, 122E, 123E, and 124E, thereby adjusting the temperature (or pressure) of the refrigerant at the inlet side of each of the plurality of indoor heat exchangers 211, 221, 231, and 241. In other words, in order to adjust the temperature (or pressure) of the refrigerant at the inlet side of each of the plurality of indoor heat exchangers 211, 221, 231, and 241 to the target temperature (or target pressure), the opening degree of each of the plurality of low pressure valves 121E, 122E, 123E, 124E may be adjusted. As a result, the temperature (blowdown temperature) of indoor air supplied to the cooling space through each of the plurality of indoor heat exchangers 211, 221, 231, and 241 may be adjusted for each indoor heat exchanger.

For example, the opening degree of the second low pressure valve 122E may be smaller than the opening degree of the first low pressure valve 121E, and larger than the opening degree of the third low pressure valve 123E. The opening degree of the fourth low pressure valve 124E may be smaller than the opening degree of the third low pressure valve 123E. At this time, based on a case where the indoor heat exchangers have the same superheat, the blowdown temperature may be higher in the order of the fourth indoor heat exchanger 241, the third indoor heat exchanger 231, the second indoor heat exchanger 221, and the first indoor heat exchanger 211.

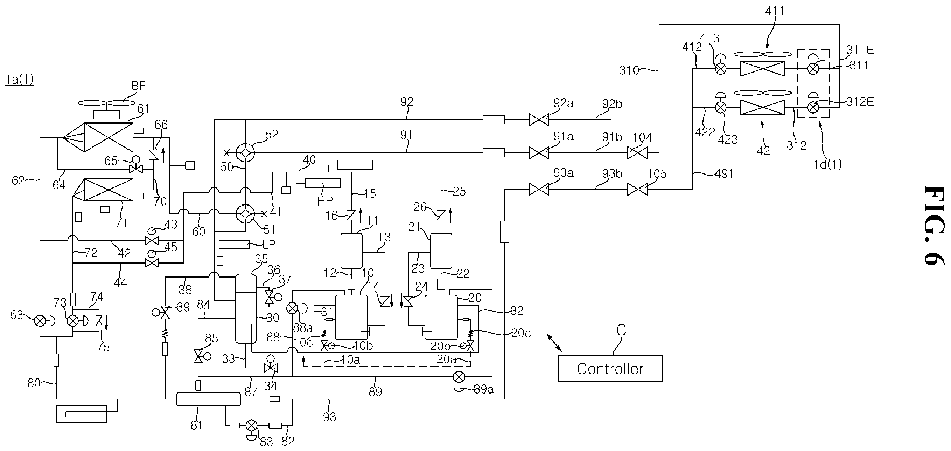

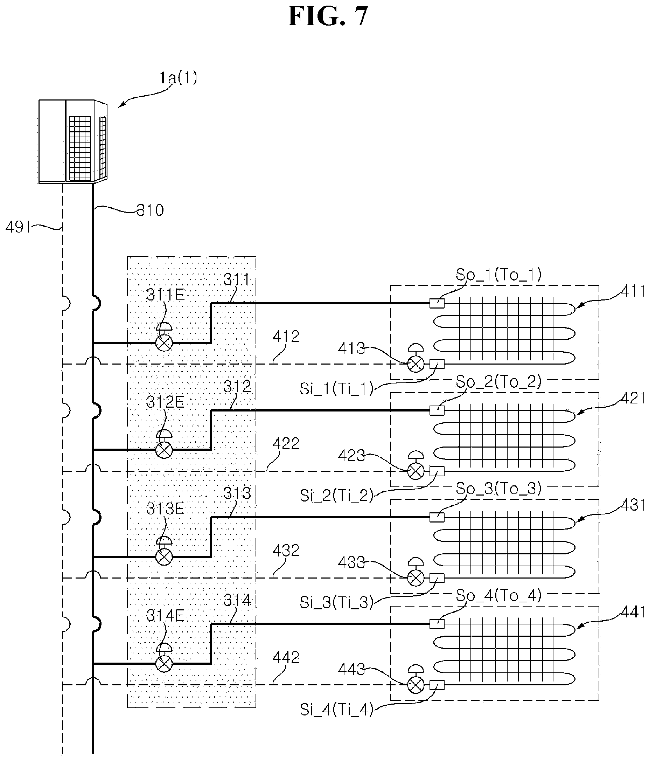

Referring to FIG. 6, unlike the above with reference to FIGS. 1 to 5, the heat recovery unit 1b may be omitted, and the plurality of indoor heat exchangers 411 and 421 may be connected to the outdoor unit 1a through the refrigerant pipe. For example, the number of indoor heat exchangers 411 and 421 may be 2 or 4 (see FIG. 7), or 3 or 5 or more.

The gas pipe 91b may be connected to a gaseous refrigerant connection pipe 310 through a second connection valve 104. The liquid pipe 93b may be connected to a liquid refrigerant connection pipe 491 through a second connection valve 105. A first indoor heat exchanger 411 may connect a first connection pipe 311 of the gaseous refrigerant connection pipe 310 and a first connection pipe 412 of the liquid refrigerant connection pipe 491. A second indoor heat exchanger 421 may connect a second connection pipe 312 of the gaseous refrigerant connection pipe 310 and a second connection pipe 422 of the liquid refrigerant connection pipe 491.

A first indoor expansion valve 413 may be installed in the first connection pipe 412, and expand the refrigerant flowing through the first connection pipe 412. A second indoor expansion valve 423 may be installed in the second connection pipe 422, and may expand the refrigerant flowing through the second connection pipe 422. The indoor expansion valve 413, 423 may be an electronic expansion valve (EEV).

A first low pressure valve 311E may be installed in the first connection pipe 311, and the opening degree of the first low pressure valve 311E may be adjusted. A second low pressure valve 312E may be installed in the second connection pipe 312, and the opening degree of the second low pressure valve 312E may be adjusted. The low pressure valve 311E, 312E may be an Electronic Expansion Valve (EEV). The low pressure valve 311E, 312E may be a large-capacity EEV having a large flow coefficient. Meanwhile, the low pressure valves 311E and 312E and the refrigerant pipes in which they are installed may constitute an evaporation pressure control device 1d. The low pressure valve 311E, 312E may be referred to as a variable valve 311E, 312E.

<Heating Operation>

The high-temperature, high-pressure refrigerant discharged from the compressor 10, 20 may flow into the gaseous refrigerant connection pipe 310 via the oil separator 11, 21, the second switching valve 52, the high-pressure pipe 91, and the gas pipe 91b. The refrigerant of the gaseous refrigerant connection pipe 310 may be condensed while passing through the first and second indoor heat exchangers 411 and 421. Accordingly, the indoor space in which the first and second indoor heat exchangers 411 and 421 are installed may be heated. Meanwhile, the first and second indoor expansion valves 413 and 423 may control the degree of supercooling. Here, the degree of supercooling is a difference between the saturation temperature corresponding to the condensation pressure of the first and second indoor heat exchangers 411 and 421 and the outlet temperature of the first and second indoor heat exchangers 411 and 421.

The condensed refrigerant may flow into the liquid pipe 93b through the liquid refrigerant connection pipe 491. The refrigerant in the liquid pipe 93 may be cooled while passing through the supercooler 81, expanded by the outdoor expansion valve 63, 73, and evaporated while passing through the outdoor heat exchanger 61, 71.

The evaporated refrigerant may be returned to the compressor 10, 20 via the first connection pipe 60, the first switching valve 51, the low pressure pipe 92, and the accumulator 30. Accordingly, the heating cycle of the air conditioner using the first and second indoor heat exchangers 411 and 421 may be completed.

<Cooling operation>

The high-temperature, high-pressure refrigerant discharged from the compressor 10, 20 may flow into the first connection pipe 60 via the oil separator 11, 21 and the first switching valve 51, and the refrigerant in the first connection pipe 60 may be condensed while passing through the outdoor heat exchanger 61, 71.

The condensed refrigerant may flow into the liquid refrigerant connection pipe 491 via the outdoor expansion valve 63, 73, the supercooler 81, the liquid pipe 93, and the liquid pipe 93b. The refrigerant in the liquid refrigerant connection pipe 491 may be expanded while passing through the first and second indoor expansion valves 413 and 423, and may be evaporated while passing through the first and second indoor heat exchangers 411 and 421. Accordingly, the indoor space in which the first and second indoor heat exchangers 411 and 421 are installed may be cooled. Meanwhile, the first and second indoor expansion valves 413 and 423 may control the degree of superheat. Here, the degree of superheat is a difference between the temperature of the refrigerant sucked into the compressor 10, 20 (or the temperature of the refrigerant at the outlet side of the first and second indoor heat exchangers 411 and 421) and the saturation temperature corresponding to the evaporation pressure of the first and second indoor heat exchangers 411 and 421 (or the temperature of the refrigerant at the inlet side of the first and second indoor heat exchangers 411 and 421).

The evaporated refrigerant may flow into the low pressure pipe 92 through the gaseous refrigerant connection pipe 310, the gas pipe 91b, 91, and the second switching valve 52. The refrigerant in the low pressure pipe 92 may be returned to the compressor 10, 20 via the accumulator 30. Accordingly, the cooling cycle of the air conditioner using the first and second indoor heat exchangers 411 and 421 may be completed.

Referring to FIGS. 6 and 7, the plurality of indoor heat exchangers 411, 421, 431, and 441 may serve as an evaporator and may have the same or different evaporation pressure. The plurality of low pressure valves 311E, 312E, 313E, and 314E and the plurality of indoor expansion valves 413, 423, 433, and 443 may be opened. The low pressure valves 311E, 312E, 313E, and 314E may be referred to as variable valves 311E, 312E, 313E, and 314E.

The high-temperature, high-pressure refrigerant discharged from the compressor 10, 20 may flow into the first connection pipe 60 via the oil separator 11, 21 and the first switching valve 51, and the refrigerant of the first connection pipe 60 may be condensed while passing through the outdoor heat exchanger 61, 71. The condensed refrigerant may flow into the liquid refrigerant connection pipe 491 via the outdoor expansion valve 63, 73, the supercooler 81, the liquid pipe 93, and the liquid pipe 93b.

The refrigerant of the liquid refrigerant connection pipe 491 may pass through the plurality of connection pipes 412, 422, 432, and 442, be expanded by the plurality of indoor expansion valves 413, 423, 433, and 443, and be evaporated while passing through the plurality of indoor heat exchangers 411, 421, 431, and 441. Thus, the indoor space in which the plurality of indoor heat exchangers 411, 421, 431, and 441 are installed may be cooled. The evaporated refrigerant may be provided to the gaseous refrigerant connection pipe 310 via the plurality of connection pipes 311, 312, 313, and 314 and the plurality of low pressure valves 311E, 312E, 313E, and 314E.

The refrigerant of the gaseous refrigerant connection pipe 310 may flow into the low pressure pipe 92 through the gas pipe 91b, 91 and the second switching valve 52. The refrigerant in the low pressure pipe 92 may be returned to the compressor 10, 20 via the accumulator 30. Accordingly, the cooling cycle of the air conditioner using the plurality of indoor heat exchangers 411, 421, 431, and 441 may be completed.

In this case, each of the plurality of indoor expansion valves 413, 423, 433, and 443 may control the degree of superheat of each of the plurality of indoor heat exchangers 411, 421, 431, and 441. Here, the degree of superheat is a difference between the temperature of the refrigerant sucked into the compressor 10, 20 (or the temperature of the refrigerant at the outlet side of each indoor heat exchanger) and the saturation temperature corresponding to the evaporation pressure of each indoor heat exchanger (or the temperature of the refrigerant at the inlet side of each indoor heat exchanger). For example, the temperature ($To\_1$, $To\_2$, $To\_3$, $To\_4$) of the refrigerant at the outlet side of each of the plurality of indoor heat exchangers 411, 421, 431, and 441 may be measured by each of the plurality of temperature sensors $So\_1$, $So\_2$, $So\_3$, and $So\_4$.

When the compressor 10, 20 of the outdoor unit 1a operates at a specific operating frequency, the pressure of the refrigerant sucked into the compressor 10, 20 may be constant. In this case, the evaporation pressure of each of the plurality of indoor heat exchangers 411, 421, 431, and 441 may be adjusted by adjusting the opening degree of each of the plurality of low pressure valves 311E, 312E, 313E, and 314E. In addition, the refrigerant that passes through each of the plurality of indoor expansion valves 413, 423, 433, and 443, and flows into the inlet of each of the plurality of indoor heat exchangers 411, 421, 431, and 441 has a two-phase state. Thus, it can be said that the temperature of the refrigerant at the inlet side of each of the plurality of indoor heat exchangers 411, 421, 431, and 441 may be adjusted by adjusting the opening degree of each of the plurality of low pressure valves 311E, 312E, 313E, and 314E. This can be expressed as in Equation 2 below.

$$\text{Equation 2: } L1 = f(Ti\_1),\ L2 = f(Ti\_2),\ L3 = f(Ti\_3),\ L4 = f(Ti\_4)$$

Here, L1 is the opening degree of the first low pressure valve 311E, and $Ti\_1$ is the temperature of the refrigerant at the inlet side of the first indoor heat exchanger 411, which can be measured by a first temperature sensor $Si\_1$. L2 is the opening degree of the second low pressure valve 312E, and $Ti\_2$ is the temperature of the refrigerant at the inlet side of the second indoor heat exchanger 421, which can be measured by a second temperature sensor $Si\_2$. L3 is the opening degree of the third low pressure valve 313E, and $Ti\_3$ is the temperature of the refrigerant at the inlet side of the third indoor heat exchanger 431, which can be measured by a third temperature sensor $Si\_3$. L4 is the opening degree of the fourth low pressure valve 314E, and $Ti\_4$ is the temperature of the refrigerant at the inlet side of the fourth indoor heat exchanger 441, which can be measured by a fourth temperature sensor $Si\_4$. Alternatively, more precisely, the opening degree of the low pressure valve described above and later may be adjusted based on the pressure of the refrigerant at the inlet side of the indoor heat exchanger measured by a pressure sensor.

In this case, if the pressure drop of the refrigerant in the refrigerant pipe connecting the indoor heat exchanger and the compressor is excluded to be considered, the evaporation pressure of the indoor heat exchanger 411, 421, 431, 441 connected to the fully opened low pressure valves 311E, 312E, 313E, 314E may be the same as the pressure of the refrigerant at the inlet side of the compressor 10, 20. In addition, as the opening degree of the low-pressure valve 311E, 312E, 313E, 314E decreases, the evaporation pressure of the indoor heat exchanger 411, 421, 431, 441 connected thereto increases may be greater than the pressure (fixed value) of the refrigerant at the inlet side of the compressor 10, 20.

Accordingly, the controller C of the air conditioner adjusts the opening degree of each of the plurality of low pressure valves 311E, 312E, 313E, and 314E, thereby adjusting the temperature (or pressure) of the refrigerant at the inlet side of each of the plurality of indoor heat exchangers 411, 421, 431, and 441. In other words, in order to adjust the temperature (or pressure) of the refrigerant at the inlet side of each of the plurality of indoor heat exchangers 411, 421, 431, and 441 to the target temperature (or target pressure), the opening degree of each of the plurality of low pressure valves 311E, 312E, 313E, and 314E may be adjusted. As a result, the temperature (blowdown temperature) of indoor air supplied to the cooling space through each of the plurality of indoor heat exchangers 411, 421, 431, and 441 may be adjusted for each indoor heat exchanger.

For example, the opening degree of the second low pressure valve 312E may be smaller than the opening degree of the first low pressure valve 311E, and larger than the opening degree of the third low pressure valve 313E. The opening degree of the fourth low pressure valve 314E may be smaller than the opening degree of the third low pressure valve 313E. At this time, based on a case where the indoor heat exchangers have the same superheat, the blowdown temperature may be higher in the order of the fourth indoor heat exchanger 441, the third indoor heat exchanger 431, the second indoor heat exchanger 421, and the first indoor heat exchanger 411.

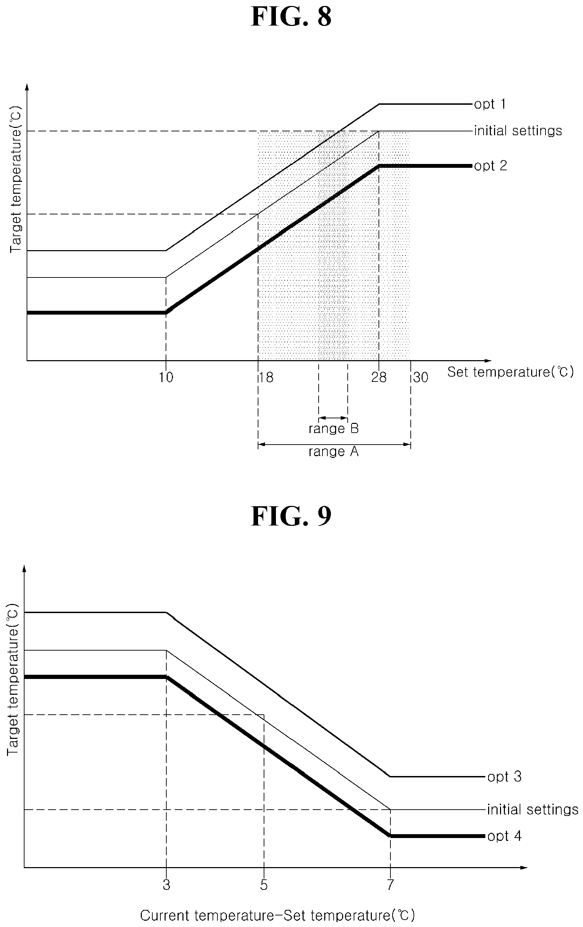

Referring to FIG. 8, the following method may be used to determine the target temperature of the refrigerant at the inlet side of the indoor heat exchanger. The temperature range (range A) of the indoor space that can be selected by a user may be 18 to 30°C, and the temperature range (range B) of the indoor space that a user mainly selects may be 25 to 27°C. For example, if a user selects a temperature within the temperature range (range B), it can be estimated that the user wishes to provide air at 14 to 15°C to the indoor space, and the target temperature of the refrigerant at the inlet side of the indoor heat exchanger may be controlled at 12-13°C and the degree of superheat may be controlled at 1-2°C.

In initial settings, the target temperature of the refrigerant at the inlet side of the specific indoor heat exchanger may decrease as a set temperature of a specific indoor space selected by a user decreases. That is, as the set temperature of the specific indoor space selected by a user decreases, the opening degree of the low pressure valves (121E, 122E, 123E, 124E, see FIG. 5; 311E, 312E, 313E, 314E, see FIG. 7) connected to the specific indoor heat exchanger increases.

In a first user settings (opt 1), the target temperature of the refrigerant at the inlet side of a specific indoor heat exchanger may decrease as a set temperature of a specific indoor space selected by a user decreases. That is, as a set temperature of a specific indoor space selected by a user decreases, the opening degree of the low pressure valves (121E, 122E, 123E, 124E, see FIG. 5; 311E, 312E, 313E, 314E, see FIG. 7) connected to the specific indoor heat exchanger increases. However, in a set temperature-target temperature graph, the first user settings (opt 1) may be offset toward the (+) side of a target temperature axis than the initial settings. That is, for the same set temperature, the target temperature according to the first user settings may be higher than the target temperature according to the initial settings. The first user settings may be referred to as a low speed cooling setting.

In a second user settings (opt 2), the target temperature of the refrigerant at the inlet side of a specific indoor heat exchanger may decrease as a set temperature of a specific indoor space selected by a user decreases. That is, as a set temperature of a specific indoor space selected by a user decreases, the opening degree of the low pressure valves (121E, 122E, 123E, 124E, see FIG. 5; 311E, 312E, 313E, 314E, see FIG. 7) connected to the specific indoor heat exchanger increases. However, in a set temperature-target temperature graph, the second user settings (opt 2) may be offset toward the (-) side of a target temperature axis than the initial settings. That is, for the same set temperature, the target temperature according to the second user settings may be lower than the target temperature according to the initial settings. The second user settings may be referred to as a high speed cooling setting.

Referring to FIG. 9, the following method may be used to determine the target temperature of the refrigerant at the inlet side of the indoor heat exchanger.

In initial settings, as a difference between a current temperature of a specific indoor space of interest to a user and a set temperature of the specific indoor space selected by the user (hereinafter referred to as temperature difference) increases, a target temperature of the refrigerant at the inlet side of the specific indoor heat exchanger may be lowered. That is, as the temperature difference increases, the opening degree of the low pressure valve (121E, 122E, 123E, 124E, see FIG. 5; 311E, 312E, 313E, 314E, see FIG. 7) connected to the specific indoor heat exchanger may increase.

In a third user settings (opt 3), the target temperature of the refrigerant at the inlet side of a specific indoor heat exchanger may decrease as the temperature difference increases. That is, as the temperature difference increases, the opening degree of the low pressure valve (121E, 122E, 123E, 124E, see FIG. 5; 311E, 312E, 313E, 314E, see FIG. 7) connected to the specific indoor heat exchanger may increase. However, in the temperature difference-target temperature graph, the third user settings (opt 3) may be offset toward the (+) side of a target temperature axis than the initial settings. That is, with respect to the same temperature difference, the target temperature according to the third user settings may be higher than the target temperature according to the initial settings. The third user settings may be referred to as a low speed cooling settings.

In a fourth user settings (opt 4), the target temperature of the refrigerant at the inlet side of a specific indoor heat exchanger may decrease as the temperature difference increases. That is, as the temperature difference increases, the opening degree of the low pressure valve (121E, 122E, 123E, 124E, see FIG. 5; 311E, 312E, 313E, 314E, see FIG. 7) connected to the specific indoor heat exchanger may increase. However, in the temperature difference-target temperature graph, the fourth user settings (opt 4) may be offset toward the (+) side of a target temperature axis than the initial settings. That is, with respect to the same temperature difference, the target temperature according to the fourth user settings may be lower than the target temperature according to the initial settings. The fourth user settings may be referred to as a high speed cooling settings.

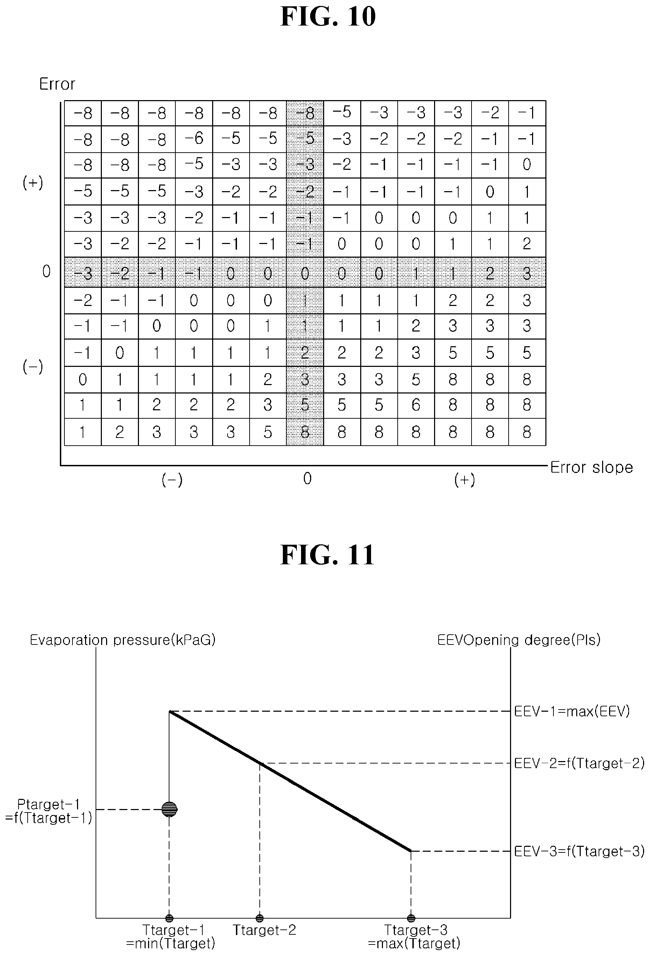

Referring to FIG. 10, a look up table may be used to adjust the opening of the low pressure valve in order to adjust the temperature of the refrigerant at the inlet side of the indoor heat exchanger to a target temperature.

An error, which is a variable on a vertical axis of the lookup table of FIG. 10, is a difference between the current temperature (Ti_present) of the refrigerant at the inlet side of the indoor heat exchanger and the target temperature (Ti_target). An error slope, which is a variable on a horizontal axis of the lookup table of FIG. 10, is a difference between the current temperature (Ti_present) of the refrigerant at the inlet side of the indoor heat exchanger for a certain time period (Δt) and the previous temperature (Ti_past).

$$\text{Equation 3: Error} = \text{Ti\_present} - \text{Ti\_target}; \text{ Error slope} = (\text{Ti\_present} - \text{Ti\_past})/\Delta t$$

The numbers in the look-up table of FIG. 10 indicates that the opening degree of the low pressure valve (121E, 122E, 123E, 124E, see FIG. 5; 311E, 312E, 313E, 314E, see FIG. 7) is maintained intactly, or indicates the degree to which the opening degree is increased or decreased. The number 0 means that the opening degree of the low pressure valve (121E, 122E, 123E, 124E, see FIG. 5; 311E, 312E, 313E, 314E, see FIG 7) is maintained intactly. For example, the number 1 means that the opening degree of the low pressure valve (121E, 122E, 123E, 124E, see FIG. 5; 311E, 312E, 313E, 314E, see FIG. 7) is increased by 1% from the current state. For example, the number -3 means that the opening degree of the low pressure valve (121E, 122E, 123E, 124E, see FIG. 5; 311E, 312E, 313E, 314E, see FIG. 7) is decreased by -3% from the current state.

For example, the weight of the error for the change in the opening degree of the low pressure valve (121E, 122E, 123E, 124E, see FIG. 5; 311E, 312E, 313E, 314E, see FIG. 7) may be greater than the weight of the error slope.

If the error is '0' but the error slope is a positive number greater than or equal to a certain value, the controller C of the air conditioner may lower the temperature of the refrigerant at the inlet side of a specific indoor heat exchanger by increasing the opening degree of a specific low pressure valve connected to the specific indoor heat exchanger. If the error is '0' but the error slope is a negative number less than a certain value, the controller C of the air conditioner reduces the opening degree of a specific low pressure valve connected to a specific indoor heat exchanger to increase the temperature of the refrigerant at the inlet side of the specific indoor heat exchanger.

If the error slope is '0' but the error is a positive number, the controller C of the air conditioner may increase the opening degree of a specific low pressure valve connected to a specific indoor heat exchanger to lower the temperature of the refrigerant at the inlet side of the specific indoor heat exchanger. If the error slope is '0' but the error is negative, the controller C of the air conditioner may decrease the opening degree of a specific low pressure valve connected to a specific indoor heat exchanger to increase the temperature of the refrigerant at the inlet side of the specific indoor heat exchanger.

Referring to FIG. 11, the low-pressure valve connected to a specific indoor heat exchanger in which the lowest target temperature (min(Ttarget)) is set among the target temperatures of the refrigerant at the inlet side of the plurality of indoor heat exchangers may be fully opened, and the operating frequency Hz of the compressor 10, 20 may be controlled to adjust the temperature of the refrigerant at the inlet side of the specific indoor heat exchanger to the lowest target temperature (min(Ttarget)).

For example, the target temperature (Ttarget-1) of the refrigerant at the inlet side of the first indoor heat exchanger (211, see FIG. 5; 411, see FIG. 7) may be the lowest target temperature (min(Ttarget)). The target temperature (Ttarget-2) of the refrigerant at the inlet side of the second indoor heat exchanger (221, see FIG. 5; 421, see FIG. 7) may be greater than the target temperature (Ttarget-1). The target temperature (Ttarget-3) of the refrigerant at the inlet side of the third indoor heat exchanger (231, see FIG. 5; 431, see FIG. 7) may be the highest target temperature (max(Ttarget)).

The opening degree of the first low pressure valve (EEV-1) (121E, see FIG. 5; 311E, see FIG. 7) connected to the first indoor heat exchanger (211, see FIG. 5; 411, see FIG. 7) may be set to the maximum. At this time, the target temperature (Ttarget-1) or a corresponding target pressure (Ptarget-1) may be adjusted by controlling the operating frequency Hz of the compressor 10, 20.

The opening degree of the second low pressure valve (EEV-2) (122E, see FIG. 5; 312E, see FIG. 7) connected to the second indoor heat exchanger (221, see FIG. 5; 421, see FIG. 7) may be adjusted to meet the target temperature (Ttarget- 2).

The opening degree of the third low pressure valve (EEV-3) (123E, see FIG. 5; 313E, see FIG. 7) connected to the third indoor heat exchanger (231, see FIG. 5; 431, see FIG. 7) may be adjusted to meet the target temperature (Ttarget- 3).

Accordingly, compared to a case where all the low pressure valves are partially closed, unnecessary pressure loss and efficiency reduction can be prevented.

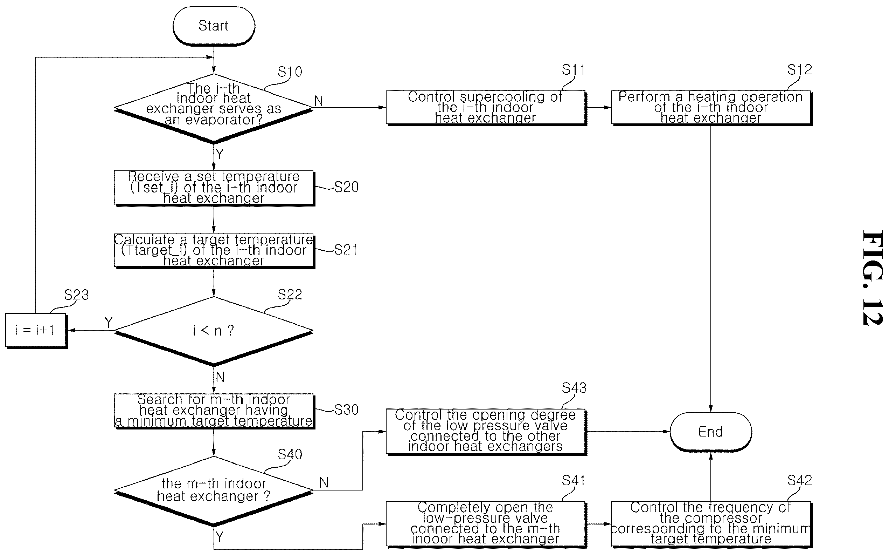

Referring to FIGS. 5 and 12, the controller C of the air conditioner may be electrically connected to components of the air conditioner to control their operations.

When the i-th indoor heat exchanger, among the plurality of indoor heat exchangers 211, 221, 231, and 241, serves as an evaporator (S10: Yes), the controller C may receive a set temperature (Tset_i, for example, a temperature selected (input) by a user) of the i-th indoor heat exchanger (S20), and calculate a target temperature (Ttarget_i, see FIGS. 8 and 9) of the refrigerant at the inlet side of the i-th indoor heat exchanger (S21). When the i-th indoor heat exchanger, among the plurality of indoor heat exchangers 211, 221, 231, and 241, does not serve as an evaporator (S10: No) and serves as a condenser, the controller C may perform a heating operation while controlling supercooling of the i-th indoor heat exchanger (S11, S12).

Here, i starts from 1 and may terminate at n, which is the total number of indoor heat exchangers (S22, S23). That is, the above described steps (S10, S20, S21, S11, S12) may be sequentially performed for all indoor heat exchangers (S22, S23).

The controller C may search for m-th indoor heat exchanger having a minimum target temperature (min(Ttarget)) among indoor heat exchangers serving as an evaporator (S30). For example, some of indoor heat exchangers serving as an evaporator may have a minimum target temperature (min(Ttarget)). In this case, m may be a number(s) corresponding to the sequence number(s) of some of the indoor heat exchangers serving as an evaporator. For another example, all indoor heat exchangers serving as an evaporator may have a minimum target temperature (min(Ttarget)). In this case, m may be numbers corresponding to the sequence numbers of all indoor heat exchangers serving as an evaporator.

With respect to the m-th indoor heat exchanger (S40: Yes), the controller C may completely open the low-pressure valve (121E, 122E, 123E, 124E, see FIG. 5) connected to the m-th indoor heat exchanger (S41), and may control the operating frequency Hz of the compressor 10, 20 so as to correspond to the minimum target temperature (min(Ttarget)) (S42). With respect to other indoor heat exchanger (S40: No), the controller C may control the opening degree of the low pressure valve 121E, 122E, 123E, 124E (see FIG. 5) connected to the other indoor heat exchanger to match the target temperature (Ttarget) of the refrigerant at the inlet side of the other indoor heat exchanger (S43).

Accordingly, if necessary, the blowdown temperature, which is the temperature of the air supplied to the cooling space, may be adjusted differently for each indoor heat exchanger.

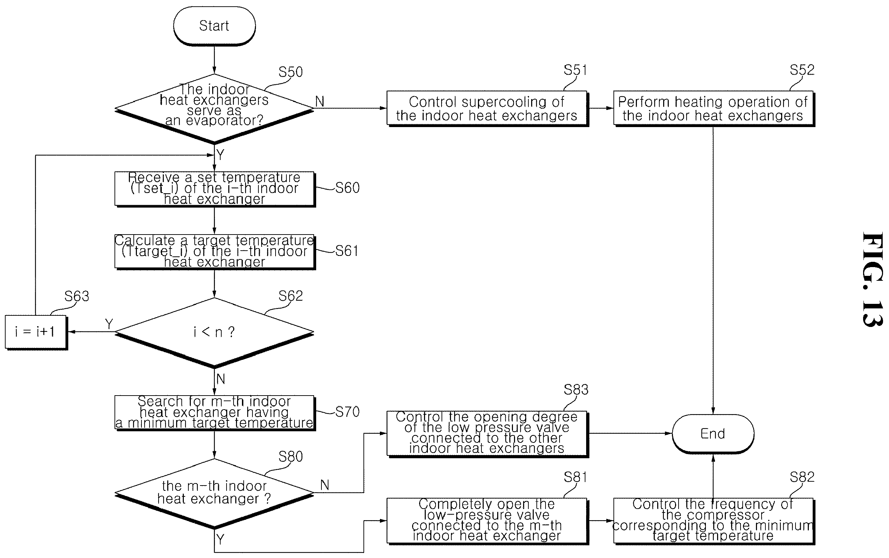

Referring to FIGS. 7 and 13, the controller C of the air conditioner may be electrically connected to components of the air conditioner to control their operations.

When the plurality of indoor heat exchangers 411, 421, 431, and 441 serve as an evaporator (S50: Yes), the controller C may receive a set temperature (Tset_i) (for example, a temperature selected(input) by a user) of the i-th indoor heat exchanger (S60), and may calculate the target temperature (Ttarget_i, see FIGS. 8 and 9) of the refrigerant at the inlet side of the i-th indoor heat exchanger (S61). When the i-th indoor heat exchanger, among the plurality of indoor heat exchangers 211, 221, 231, and 241, does not serve as an evaporator (S50: No) and serves as a condenser, the controller C may perform a heating operation while controlling supercooling of indoor heat exchanger(S51, S52).

Here, i starts from 1 and may terminate at n, which is the total number of indoor heat exchangers (S62, S63). That is, the above described steps (S60, S61) may be sequentially performed for all indoor heat exchangers (S62, S63).

The controller C may search for m-th indoor heat exchanger having a minimum target temperature (min(Ttarget)) among indoor heat exchangers serving as an evaporator (S70). For example, some of indoor heat exchangers serving as an evaporator may have a minimum target temperature (min(Ttarget)). In this case, m may be a number(s) corresponding to the sequence number(s) of some of the indoor heat exchangers serving as an evaporator. For another example, all indoor heat exchangers serving as an evaporator may have a minimum target temperature (min(Ttarget)). In this case, m may be number(s) corresponding to the sequence numbers of all indoor heat exchangers serving as an evaporator.

With respect to the m-th indoor heat exchanger (S80: Yes), the controller C may completely open the low-pressure valve (311E, 312E, 313E, 314E, see FIG. 7) connected to the m-th indoor heat exchanger (S81), and may control the operating frequency Hz of the compressor 10, 20 so as to correspond to the minimum target temperature (min(Ttarget)) (S82).

With respect to other indoor heat exchanger (S80: No), the controller C may control the opening degree of the low pressure valve 311E, 312E, 313E, 314E (see FIG. 7) connected to the other indoor heat exchanger to match the target temperature (Ttarget) of the refrigerant at the inlet side of the other indoor heat exchanger (S83).

Accordingly, if necessary, the blowdown temperature, which is the temperature of the air supplied to the cooling space, may be adjusted differently for each indoor heat exchanger.

The effects of the air conditioner according to the present disclosure are described as follows.

According to at least one of the embodiments of the present disclosure, it is possible to provide an air conditioner capable of setting different evaporation pressures of a plurality of indoor heat exchangers functioning as an evaporator, thereby differently setting a blowdown temperature for each indoor space.

According to at least one of the embodiments of the present disclosure, it is possible to provide a method for setting a target temperature of a refrigerant in an inlet side of an indoor heat exchanger.

According to at least one of the embodiments of the present disclosure, it is possible to provide a method for adjusting the opening degree of a variable valve to adjust the temperature of the refrigerant in an inlet side of an indoor heat exchanger to a target temperature.

According to at least one of the embodiments of the present disclosure, it is possible to provide an air conditioner capable of preventing unnecessary pressure drop and efficiency reduction.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

**Claims**

1.  An air conditioner comprising:

    a compressor (10, 20) configured to compress a refrigerant;
    an outdoor heat exchanger (61, 71) through which the refrigerant discharged from the compressor (10, 20) flows;
    a plurality of expansion valves (213, 223, 233, 243, 413, 423, 433, 443) configured to expand the refrigerant passed through the outdoor heat exchanger (61, 71);
    a plurality of indoor heat exchangers (211, 221, 231, 241, 411, 421, 431, 441) through which the refrigerant passed through the plurality of expansion valves (213, 223, 233, 243, 413, 423, 433, 443) flows;
    a plurality of connection pipes (210, 220, 311, 312, 313, 314) which connect the plurality of indoor heat exchangers (211, 221, 231, 241, 411, 421, 431, 441) and the compressor (10, 20); and
    a plurality of variable valves (121E, 122E, 123E, 124E, 311E, 312E, 313E, 314E) installed in the plurality of connection pipes (210, 220, 311, 312, 313, 314),
    wherein an opening degree of each of the plurality of variable valves (121E, 122E, 123E, 124E, 311E, 312E, 313E, 314E) is configured to be adjustable.

2.  The air conditioner of claim 1, wherein the variable valve (121E, 122E, 123E, 124E, 311E, 312E, 313E, 314E) is an electronic expansion valve, EEV.

3.  The air conditioner of claim 1 or 2, wherein a pressure of refrigerant at an inlet side of the indoor heat exchanger (211, 221, 231, 241, 411, 421, 431, 441) increases as the opening degree of the variable valve (121E, 122E, 123E, 124E, 311E, 312E, 313E, 314E) decreases.

4.  The air conditioner of any one of claims 1 to 3, wherein the opening degree of the variable valve (121E, 122E, 123E, 124E, 311E, 312E, 313E, 314E) increases as a user's set temperature for the indoor heat exchanger (211, 221, 231, 241, 411, 421, 431, 441) decreases.

5.  The air conditioner of claim 4, wherein the opening degree of the variable valve (121E, 122E, 123E, 124E, 311E, 312E, 313E, 314E) increases as a difference between a current temperature of a room where the indoor heat exchanger (211, 221, 231, 241, 411, 421, 431, 441) is located and the user's set temperature for the indoor heat exchanger (211, 221, 231, 241, 411, 421, 431, 441) increases.

6.  The air conditioner of any one of claims 1 to 5, wherein the opening degree of the variable valve (121E, 122E, 123E, 124E, 311E, 312E, 313E, 314E) is adjusted based on an error which is a difference between a current temperature of refrigerant at an inlet side of the indoor heat exchanger (211, 221, 231, 241, 411, 421, 431, 441) and a target temperature, and an error slope which is a temperature change of the refrigerant at the inlet side of the indoor heat exchanger (211, 221, 231, 241, 411, 421, 431, 441) for a certain period of time.

7.  The air conditioner of claim 6, wherein the opening degree of the variable valve (121E, 122E, 123E, 124E, 311E, 312E, 313E, 314E) is increased from current state when the error is '0' and the error slope is positive, and is decreased from current state when the error is '0' and the error slope is negative.

8.  The air conditioner of claim 6, wherein the opening degree of the variable valve (121E, 122E, 123E, 124E, 311E, 312E, 313E, 314E) is increased from current state when the error slope is '0' and the error is positive, and is decreased from current state when the error slope is '0' and the error is negative.

9.  The air conditioner of claim 6, wherein a weight of the error is greater than a weight of the error slope with respect to a change in the opening degree of the variable valve (121E, 122E, 123E, 124E, 311E, 312E, 313E, 314E).

10. The air conditioner of any one of claims 1 to 9, wherein one of the plurality of variable valves (121E, 122E, 123E, 124E, 311E, 312E, 313E, 314E) is connected to a specific indoor heat exchanger (211, 221, 231, 241, 411, 421, 431, 441) in which the lowest target temperature is set among target temperatures of refrigerant at an inlet side of the plurality of indoor heat exchangers (211, 221, 231, 241, 411, 421, 431, 441), and is configured to be fully opened.

11. The air conditioner of claim 10, wherein an operating frequency of the compressor (10, 20) is adjustable to match a temperature of refrigerant at an inlet side of the specific indoor heat exchanger (211, 221, 231, 241, 411, 421, 431, 441) to the lowest target temperature.

12. The air conditioner of any one of claims 1 to 11, wherein an opening degree of the expansion valve (213, 223, 233, 243, 413, 423, 433, 443) is adjustable to adjust a superheat degree which is a difference between a temperature of refrigerant at an outlet side of the indoor heat exchanger (211, 221, 231, 241, 411, 421, 431, 441) and a temperature of refrigerant at an inlet side.

13. The air conditioner of claim 12, further comprising a temperature sensor (So_1, So_2, So_3, So_4) for measuring the temperature of refrigerant at the outlet side of the indoor heat exchanger (211, 221, 231, 241, 411, 421, 431, 441) and the temperature of refrigerant at the inlet side.

14. The air conditioner of any one of claims 1 to 13, wherein some of the plurality of indoor heat exchangers (211, 221, 231, 241, 411, 421, 431, 441) is maintained as an evaporator through which the refrigerant passed through the expansion valve (213, 223, 233, 243, 413, 423, 433, 443) flows, and
the rest of the plurality of indoor heat exchangers (211, 221, 231, 241, 411, 421, 431, 441) is switchable into a condenser through which the refrigerant discharged from the compressor (10, 20) flows.

15. The air conditioner of any one of claims 1 to 13, wherein the plurality of indoor heat exchangers (211, 221, 231, 241, 411, 421, 431, 441) are switchable from an evaporator through which the refrigerant passed through the expansion valve (213, 223, 233, 243, 413, 423, 433, 443) flows into a condenser through which the refrigerant discharged from the compressor (10, 20) flows.

# FIG. 1

# FIG. 2

# FIG. 3

(a)

(b)

# FIG. 4

# FIG. 5

# FIG. 6

# FIG. 7

# FIG. 8

# FIG. 9

# FIG. 10

Error

| | | | | | | | | | | | | |
|---|---|---|---|---|---|---|---|---|---|---|---|---|
| −8 | −8 | −8 | −8 | −8 | −8 | −8 | −5 | −3 | −3 | −3 | −2 | −1 |
| −8 | −8 | −8 | −6 | −5 | −5 | −5 | −3 | −2 | −2 | −2 | −1 | −1 |
| −8 | −8 | −8 | −5 | −3 | −3 | −3 | −2 | −1 | −1 | −1 | −1 | 0 |
| −5 | −5 | −5 | −3 | −2 | −2 | −2 | −1 | −1 | −1 | −1 | 0 | 1 |
| −3 | −3 | −3 | −2 | −1 | −1 | −1 | −1 | 0 | 0 | 0 | 1 | 1 |
| −3 | −2 | −2 | −1 | −1 | −1 | −1 | 0 | 0 | 0 | 1 | 1 | 2 |
| −3 | −2 | −1 | −1 | 0 | 0 | 0 | 0 | 0 | 1 | 1 | 2 | 3 |
| −2 | −1 | −1 | 0 | 0 | 0 | 1 | 1 | 1 | 1 | 2 | 2 | 3 |
| −1 | −1 | 0 | 0 | 0 | 1 | 1 | 1 | 1 | 2 | 3 | 3 | 3 |
| −1 | 0 | 1 | 1 | 1 | 1 | 2 | 2 | 2 | 3 | 5 | 5 | 5 |
| 0 | 1 | 1 | 1 | 1 | 2 | 3 | 3 | 3 | 5 | 8 | 8 | 8 |
| 1 | 1 | 2 | 2 | 2 | 3 | 5 | 5 | 5 | 6 | 8 | 8 | 8 |
| 1 | 2 | 3 | 3 | 3 | 5 | 8 | 8 | 8 | 8 | 8 | 8 | 8 |

(+)

0

(−)

(−)　　　0　　　(+) — Error slope

# FIG. 11

Evaporation pressure(kPaG)　　　　　　　　　　EEVOpening degree(Pls)

EEV−1=max(EEV)

EEV−2=f(Ttarget−2)

Ptarget−1
=f(Ttarget−1)

EEV−3=f(Ttarget−3)

Ttarget−1
=min(Ttarget)　　Ttarget−2　　　　Ttarget−3
=max(Ttarget)

**FIG. 12**

Start

S10 — The i-th indoor heat exchanger serves as an evaporator? — N →

S11 — Control supercooling of the i-th indoor heat exchanger →

S12 — Perform a heating operation of the i-th indoor heat exchanger

Y ↓

S20 — Receive a set temperature (Tset_i) of the i-th indoor heat exchanger

S21 — Calculate a target temperature (Ttarget_i) of the i-th indoor heat exchanger

S22 — i < n ? — Y → S23 — i = i+1

N ↓

S30 — Search for m-th indoor heat exchanger having a minimum target temperature

S40 — the m-th indoor heat exchanger ? — N →

S43 — Control the opening degree of the low pressure valve connected to the other indoor heat exchangers → End

Y →

S41 — Completely open the low-pressure valve connected to the m-th indoor heat exchanger →

S42 — Control the frequency of the compressor corresponding to the minimum target temperature → End

26

**FIG. 13**

Start

S50 — The indoor heat exchangers serve as an evaporator?

N → S51 — Control supercooling of the indoor heat exchangers → S52 — Perform heating operation of the indoor heat exchangers

Y → S60 — Receive a set temperature (Tset_i) of the i-th indoor heat exchanger

S61 — Calculate a target temperature (Ttarget_i) of the i-th indoor heat exchanger

S62 — i < n ?

Y → S63 — i = i+1

N → S70 — Search for m-th indoor heat exchanger having a minimum target temperature

S80 — the m-th indoor heat exchanger ?

N → S83 — Control the opening degree of the low pressure valve connected to the other indoor heat exchangers → End

Y → S81 — Completely open the low-pressure valve connected to the m-th indoor heat exchanger → S82 — Control the frequency of the compressor corresponding to the minimum target temperature → End

Europäisches
Patentamt

European
Patent Office

Office européen
des brevets

# EUROPEAN SEARCH REPORT

Application Number

EP 23 20 4452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/252443 A1 (NAITO KOJI [JP] ET AL) 6 September 2018 (2018-09-06) | 1-5,10, 14,15 | INV. F25B13/00 |
| Y | * paragraphs [0012] - [0029], [0043] - [0052], [0054]; figures * | 6-9, 11-13 | F25B41/20 |
| Y | EP 1 586 836 A2 (LG ELECTRONICS INC [KR]) 19 October 2005 (2005-10-19) * paragraphs [0042] - [0077]; figure 5 * | 6-9 | |
| Y | US 7 954 333 B2 (DAIKIN IND LTD [JP]) 7 June 2011 (2011-06-07) * column 2, lines 4-22; figures * * column 18, lines 35-43 * * column 19, line 47 - column 20, line 2 * * column 29, lines 24-48 * * column 10, lines 18-25 * * column 23, lines 11-53 * | 11-13 | |
| A | US 2014/216082 A1 (MORIMOTO HIROYUKI [JP] ET AL) 7 August 2014 (2014-08-07) * paragraphs [0194], [0197], [0103], [0070], [0135] * | 6-9 | |

**TECHNICAL FIELDS SEARCHED (IPC)**

F25B

The present search report has been drawn up for all claims

| Place of search | Date of completion of the search | Examiner |
|---|---|---|
| Munich | 27 February 2024 | Ritter, Christoph |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 4452

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2024

| Patent document cited in search report | | Publication date | Patent family member(s) | | Publication date |
|---|---|---|---|---|---|
| US 2018252443 | A1 | 06-09-2018 | CN | 108027179 A | 11-05-2018 |
| | | | EP | 3348934 A1 | 18-07-2018 |
| | | | JP | 6453475 B2 | 16-01-2019 |
| | | | JP | WO2017042967 A1 | 19-04-2018 |
| | | | US | 2018252443 A1 | 06-09-2018 |
| | | | WO | 2017042967 A1 | 16-03-2017 |
| EP 1586836 | A2 | 19-10-2005 | CN | 1683848 A | 19-10-2005 |
| | | | EP | 1586836 A2 | 19-10-2005 |
| | | | KR | 20050099799 A | 17-10-2005 |
| | | | US | 2005284163 A1 | 29-12-2005 |
| US 7954333 | B2 | 07-06-2011 | AU | 2007244205 A1 | 08-11-2007 |
| | | | CN | 101432584 A | 13-05-2009 |
| | | | EP | 2017556 A1 | 21-01-2009 |
| | | | JP | 4904908 B2 | 28-03-2012 |
| | | | JP | 2007298221 A | 15-11-2007 |
| | | | KR | 20090033830 A | 06-04-2009 |
| | | | US | 2009255284 A1 | 15-10-2009 |
| | | | WO | 2007126055 A1 | 08-11-2007 |
| US 2014216082 | A1 | 07-08-2014 | CN | 103890501 A | 25-06-2014 |
| | | | EP | 2796809 A1 | 29-10-2014 |
| | | | JP | 5657140 B2 | 21-01-2015 |
| | | | JP | WO2013093977 A1 | 27-04-2015 |
| | | | US | 2014216082 A1 | 07-08-2014 |
| | | | WO | 2013093977 A1 | 27-06-2013 |

EPO FORM P0459

For more details about this annex : see Official Journal of the European Patent Office, No. 12/82

**EP 4 361 529 A1**

**Patent documents cited in the description**

- KR 1020220138146